# EUROPEAN PATENT SPECIFICATION

(11) **EP 2 854 338 B1**
(45) Date of publication and mention of the grant of the patent: **23.09.2015**
(21) Application number: 13290231.3
(22) Date of filing: 27.09.2013
(51) Int. Cl.: H04L 12/26

(54) **Method to operate a network unit for generating test traffic**
Verfahren zum Betrieb einer Netzwerkeinheit zur Erzeugung von Testverkehr
Procédé pour faire fonctionner une unité de réseau pour la génération de trafic d'essai

(43) Date of publication of application: 01.04.2015
(73) Proprietor: ALCATEL LUCENT, 92100 Boulogne-Billancourt (FR)
(72) Inventor: Lataretu, Florin, 70435 Stuttgart (DE); Schlenk, Ralph, 70435 Stuttgart (DE)
(74) Representative: Wetzel, Emmanuelle

(56) References cited:
- US-A1- 2006 002 305
- US-A1- 2009 143 020
- US-A1- 2011 188 386
- Olivier Mehani ET AL: "Characterisation of the Effect of a Measurement Library on the Performance of Instrumented Tools", , 18 May 2011 (2011-05-18), pages 1-33, XP055098275, Retrieved from the Internet: URL:http://olivier.mehani.name/publication s/2011mehani_oml_performance.pdf [retrieved on 2014-01-24]

## Description

### Field of the invention

The invention relates to a method to operate a network unit of a message entity transfer network.

### Background

Generation of test traffic is an integral part of approval and regular tests of networks and its services. These networks are subjected to this test traffic to evaluate whether certain functions of the network comply with specified properties, e.g. quality of service.

US 2006/002305 A1 proposes a method for generating streams of packets of data, including generating a flow of packets of data to a switch assembly. The switch assembly includes a traffic generating loop including at least two ports in loopback mode. Packets of data are multicasted from a first port of the traffic generating loop to a second port of the traffic generating loop and to an output port of the switch assembly adapted to output the packets. Packets are looped back from the second port to the first port of the traffic generating loop.

US 2011/188386 A1 proposes a router to be tested using a packet-based testing technique in which the test packets are generated by the router. A forwarding plane in a router includes a first component to process header information of packets to determine forwarding information. A memory component stores payload data for the packets. A control plane of the router generates test packets, inserts the test packets into the forwarding plane, receives a second set of packets from the forwarding plane, analyzes the second set of packets to determine whether the second set of packets correspond to the inserted plurality of test packets, and outputs, based on the analysis, test results, relating to the operation of the routing device.

### Summary

In view of the prior art, it is an object of the invention to provide an improved network unit which avoids the disadvantages of the prior art. According to an embodiment, this object is achieved in that a first message entity is circulated and a second message entity is emitted depending on the first message entity from a network unit to a message entity transfer network.

As the second message entity is emitted according to the first message entity circulating a respective network unit does not have to provide a large memory, especially large memory of a traffic generator, or sophisticated circuitry for traffic generation. Furthermore it is possible to use the existing infrastructure without further equipment. Also sophisticated traffic shaping methods are not required any more what advantageously maintains the integrity of the message entity flow, e.g. sequence numbers or the payload are maintained. Advantageously the required artificial network traffic according to the second message entity is generated in situ by using the existing range of functions in parallel to the egress and/or ingress traffic attended by the network unit. Moreover, due to this use of existing infrastructure in favour of separate commercial test equipment and the use of existing processing means, e.g. pipelines, the costs for traffic generation for network tests can be minimized.

According to a further embodiment the first message entity is passed through a first processing unit in an ingress direction and through a second processing unit in an egress direction. The second message entity is emitted in the egress direction and/or the ingress direction. Advantageously all message entity processing steps of the respective processing units are passed through. This allows the modification of the first message entity to a large extent. Another advantage is that the first message entity is subjected to all important packet editing steps. Especially the ingress part of the network unit comprises most of these important packet editing steps.

According to a further embodiment the processing units alter the content of a header and/or of a payload of the first message entity. Furthermore, the first message entity and the second message entity are message entities according to level 2, 3 and/or 4 of the OSI model. This advantageously allows a modification of the first message entity also on higher levels as the media access control level.

According to a further embodiment the second message entity is established each time the first message entity passes a generation unit. This replication of the first message entity allows the circulation of the first message entity and the traffic generation through the second message entity.

According to a further embodiment the generation unit is arranged in the egress processing pipeline, the egress traffic manager, the ingress processing pipeline or the ingress traffic manager and therefore nearby the respective interface for emitting the second message entity. This reduces overhead regarding the treatment of the second message entity inside the network unit.

According to a further embodiment the flow of the first message entity is controlled inside the network unit by means of a flow adjustment unit. Advantageously this embodiment allows especially the control of the bandwidth of the traffic generated by the second message entity.

According to a further embodiment the first message entity is buffered inside the network unit for a first time period by means of a first buffer, especially a circular buffer, of the flow adjustment unit. Advantageously it is provided to generate traffic with a slowed down rate of message entities per time period compared with the clocking domain of the further message entities.

According to a further embodiment a further first message entity is buffered inside the network unit for a second time period by means of a second buffer, especially a circular buffer, of the flow adjustment unit. This embodiment advantageously allows a traffic mix emitted from the network unit.

According to a further embodiment a clock cycle for the transmission of the first message entity and the transmission of further message entities inside the network unit is changed by means of the flow adjustment unit. Advantageously the rate of the emitted traffic is controlled.

According to a further embodiment a set point flow value for the second message entity is applied. A current flow value of the first message entity is measured. The set point flow value and the current flow value are compared. A controller unit operates the flow adjustment unit depending on the comparison. This embodiment allows advantageously the use of a feedback control loop to generate network traffic.

### Brief description of the figures

Further features, aspects and advantages of the present invention are given in the following detailed description with reference to the drawings in which:
- Figure 1: is a schematic depiction of a method;
- Figure 2: is a further schematic depiction of a network unit;
- Figure 3: is a more detailed schematic depiction of the network unit;
- Figure 4: is a further detailed schematic depiction of the network unit; and
- Figure 5: is a schematic depiction of a control scheme for the network unit.

### Description of the embodiments

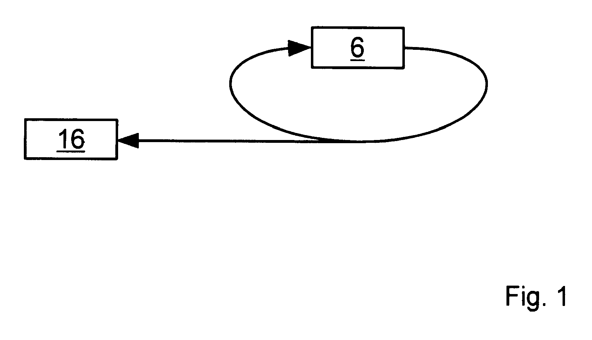

Figure 1 is a schematic depiction of a method to operate a network unit of a message entity transfer network. It is circulated a first message entity 6 by means of respective circulation means. It is emitted a second message entity 16 depending on the first message entity 6 from the network unit to the message entity transfer network. Of course, a plurality of first message entities 6 may exist and circulate.

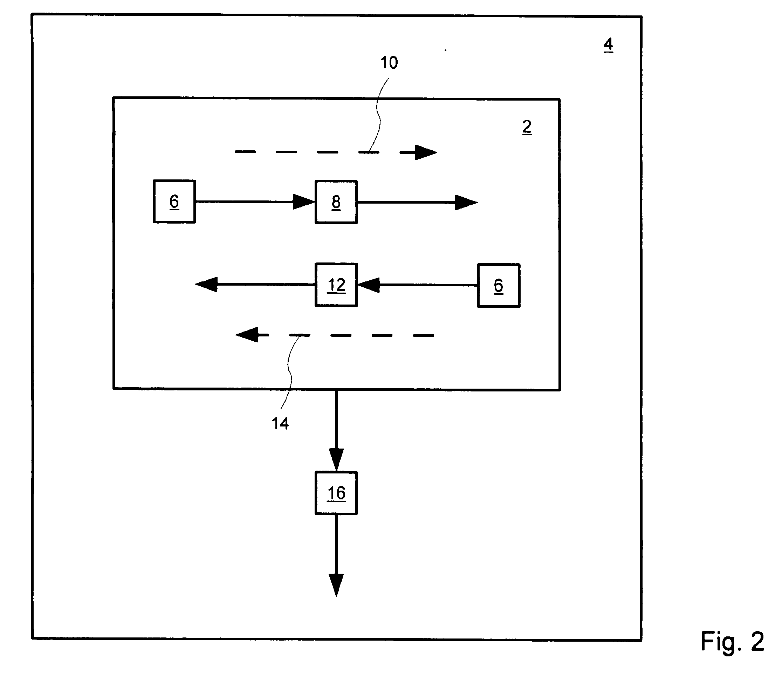

Figure 2 is a schematic depiction of the network unit 2 of the message entity transfer network 4. It is passed the first message entity 6 through a first processing unit 8 of the network unit 2 in an ingress direction 10. It is passed the first message entity 6 through a second processing unit 12 of the network unit 2 in an egress direction 14. The second message entity 16 is emitted from the network unit 2 to the message entity transfer network 4 depending on the first message entity 6 in the egress direction 14 or the ingress direction 10. The methods proposed herein are conducted on a network unit 2 which is a Network Processor, a Line Card including the Network Processor or a Switching Unit comprising the Line Card.

The first message entity 6 and further ingress traffic message entities, different from the first message entity 6, pass through the first processing unit 8 of the network unit 2 in the ingress direction 10. The first message entity 6 and further egress traffic message entities pass through the second processing unit 12 in the egress direction 14.

The emission of the second message entity 16 and/or of a plurality of second message entities 16 constitutes artificial network traffic for an egress network and/or an ingress network.

According to an embodiment the second message entity 16 is emitted in the egress direction 14 to other network units of an egress network, for example a unit like the network unit 2.

According to an embodiment the second message entity 16 is emitted first from a first Line Card to an internal unit of for example the Switching Unit before entering a further egress network through another second Line Card of the Switching Unit, the internal unit representing an ingress network.

In a further embodiment, second message entities 16 are emitted to an ingress network and an egress network.

The exemplified method and the network unit 2 are applicable independently of the underlying transmission technology, e.g. optical or electrical transmission. Also mixed architectures with optical and electrical transmission techniques benefit from the presented teaching.

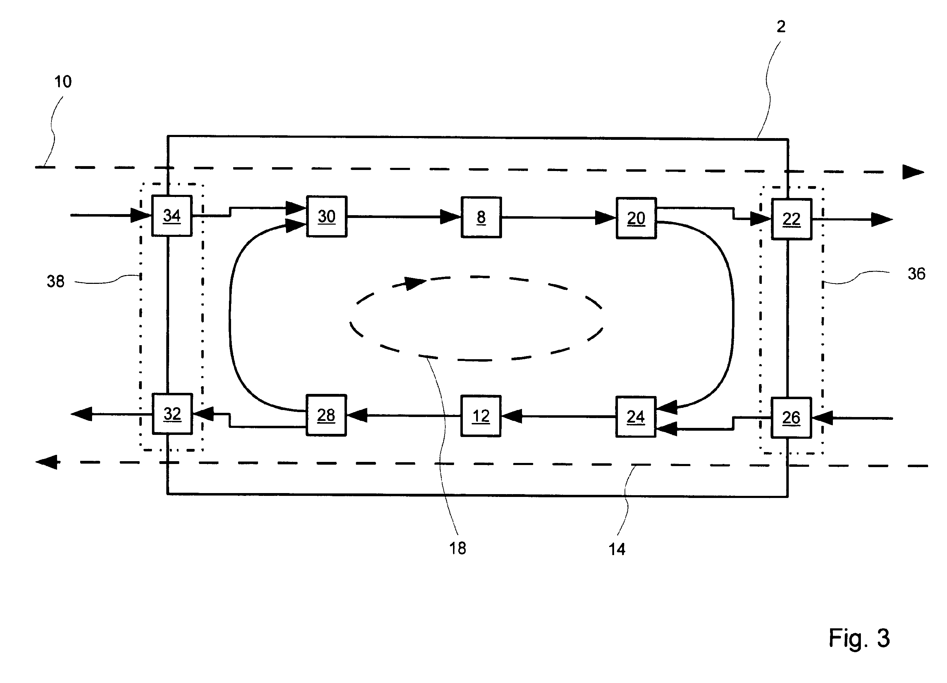

Figure 3 is a more detailed schematic depiction of the network unit 2. The first message entity 6 is not shown in figure 3. The first message entity 6 circulates inside the network unit 2 according to the circle 18. Starting with the first processing unit 8 the first message entity 6 and further ingress traffic message entities are processed and forwarded from the first processing unit 8 to a first separation unit 20, wherein the first processing unit 8 can modify the passing message entities.

According to an embodiment the separation unit 20 forwards the further ingress traffic message entities to an ingress output port 22. The separation unit 20 forwards the first message entity 6 to a first combination unit 24.

According to an embodiment the first combination unit 24 combines egress traffic message entities from an egress input port 26 with the first message entity 6 and forwards these message entities to the second processing unit 12. The second processing unit 12 processes the received message entities and forwards the received message entities to a second separation unit 28.

According to an embodiment the second separation unit 28 forwards the first message entity 6 to a second combination unit 30 and forwards the further egress traffic message entities to an egress output port 32.

According to an embodiment the second combination unit 30 combines further ingress traffic message entities coming from an ingress input port 34 with the first message entity 6 coming from the separation unit 28 and forwards these message entities to the first processing unit 8.

The first and second separation units 20 and 28 and the first and second combination units 24 and 30 are referred to as circulation means. The ingress output port 22 and the egress input port 26 can be referred to as a first interface 36.

According to an embodiment the first interface 36 can be realized as a Fabric Interface Chip of a Line Card to be connected to a corresponding interface module of a Switch Fabric Card of a Switching Unit.

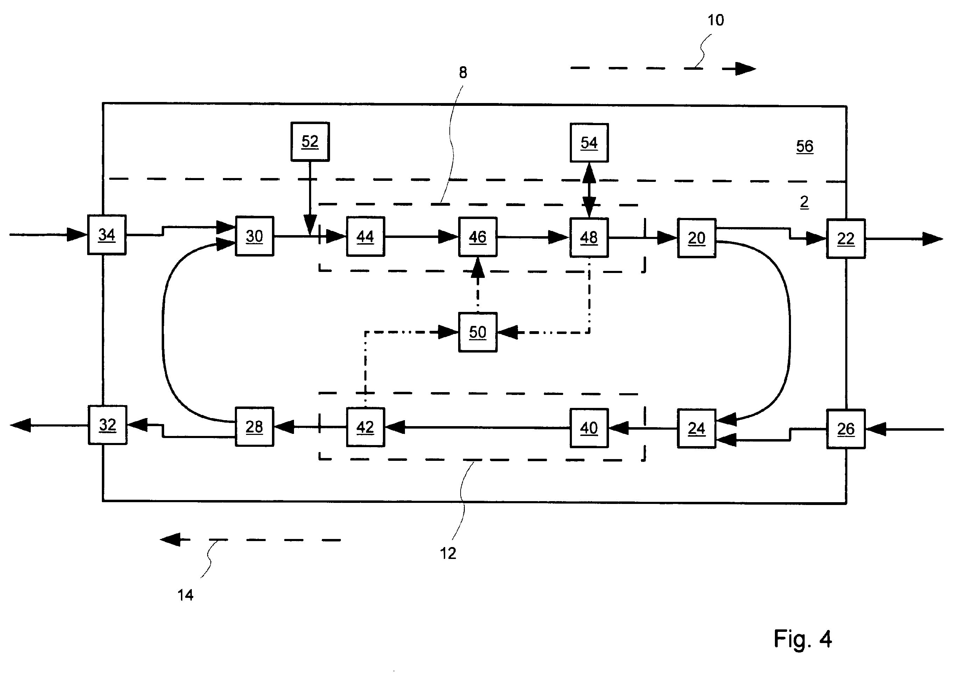

The egress output port 32 and the ingress input port 34 can be referred to as a second interface 38. According to an embodiment the second interface 38 can be realized as a Media Access Control Chip of a Line Card to be connected to the egress network. The creation of the first message entity 6 is outlined below to figure 4.

In a further embodiment the circulation means may be arranged outside of the network unit 2. However, if the same first message entity 6 passes through the first processing unit 8 and afterwards or before through the second processing unit 12 this further embodiment embraces a circulation of the first message entity 6 inside the network unit 2.

The first processing unit 8 and/or the second processing unit 12 is configured to pass the received message entities and/or to alter the content of a header of the first message entity 6 and/or the payload of the first message entity 6. The first message entity 6 and the second message entity 16 are message entities according to level 2, 3 or 4 of the OSI model, especially to the standard ISO/IEC 7498-1. Consequently, even if the egress network or the ingress network only handles e.g. level 2 message entities, the first and/or second processing means 8, 12 is configured to alter the first message entity 6 on level 2, 3 and/or 4. Nevertheless, this aspect of processing the first message entity 6 does not interfere with the meaning of the term message entity transfer network 4.

Each time the first message 6 passes a generation unit, the second message entity 16 is established. According to an embodiment the generation unit is preferably arranged closely to the emitting output port 22, 32.

In an embodiment in which the second message entity 16 is emitted in the egress direction 14 through egress output port 32, the generation unit is preferably located in the second processing unit 12 or the second separation unit 28.

According to an embodiment in which the second message entity 16 is emitted in the ingress direction 10 through ingress output port 22, the generation unit is preferably located in the first processing unit 8 or the first separation unit 20. The second message entity 16 is treated inside the network element 2 like further ingress or egress traffic message entities, consequently leading to the emission of the second message entity 16.

According to an embodiment the generation unit can be switched on to generate the second message entity 16 every time the first message entity 6 passes the generation unit. In a further embodiment, for bursts the generation unit can be switched on only for a period of time.

Figure 4 is a further detailed schematic depiction of the network unit 2. The network unit 2 of figure 4 is configured to emit the second message entity 16 in the egress direction 14. The generation unit is arranged for example in an egress processing pipeline 40, an egress traffic manager 42 or the second separation unit 28. The egress traffic manager 42 and the egress processing pipeline 40 constitute the second processing unit 12. The generation unit establishes the second message entity 16 based on an identification, especially a VLAN address in the header of the first message entity 6. In the ingress direction 10 the network unit 2 comprises in a sequence an ingress processing pipeline 44, a flow adjustment unit 46 and an ingress traffic manager 48, altogether constituting the first processing unit 8.

According to an embodiment the flow adjustment unit 46 is part of the ingress processing pipeline 44 or according to a further embodiment the flow adjustment unit 46 is arranged at a further position on the path the first message entity 5 passes. In a preferred embodiment the ingress processing pipeline 44 alters the header and/or the payload of the first message entity, e.g. a timestamp or a sequence number.

According to an embodiment traffic measurement inside the network unit 2 is conducted for example by the ingress traffic manager 48 and/or the egress traffic manager 42. The measurement result, for example a message entity rate, is applied to a controller unit 50. The flow adjustment unit 46 controls the flow of the first message entity 6. According to an embodiment the flow adjustment unit 46 may comprise a first buffer, especially a circular buffer, to buffer the first message entity 6 for a first time period.

According to a further embodiment the flow adjustment unit 46 comprises the first buffer and a second buffer, especially a circular buffer, to buffer a further first message entity 6 for a second time period. The first and second time period may vary according to a respective function.

Additionally or alternatively the controller unit 50 may instruct the flow adjustment unit 46 to change a clock cycle or clocking domain for the transmission of the first message entity 6 and the transmission of further message entities inside the network unit 2.

The controller unit 50 can instruct the flow adjustment unit 46 to delay and/or speed up the first message entity 6 to result in traffic constituted by the second message entity 16 according to a respective function. This function may result in a constant flow of the first message entity 6. In another embodiment of the function a probability distribution of first message entities over time may be selected. Especially the burstiness of the generated traffic can be influenced by the flow adjustment unit 46 by influencing the probability distribution of first message entities 6 over a certain period of time in the form of a higher rate of message entities for that certain period of time. In an embodiment the first message entity 6 will be delayed or sped up to comply with a negative exponential distribution.

According to an embodiment a control scheme it is applied a set point flow value for the second message entity 16, e.g. a set point value for a message entity rate, a payload data rate or a set point function defining a probability distribution of the emission of second message entities 16 over time. A current flow value, e.g. a current message entity rate or a current payload data rate, of the first message entity 6 is measured, for example by the ingress traffic manager 48 and/or the egress traffic manager 42. The set point flow value and the current flow value are compared. The controller unit 50 operates the flow adjustment unit 46 depending on the comparison.

In an embodiment of the up-mentioned control scheme the traffic is not measured and the flow of the first message 6 is adjusted by means of the flow adjustment unit 46 depending on a pre-set value, e.g. a message entity rate, a payload data rate or function defining a probability distribution of the emission of second message entities 16 over time. The pre-set value is stored for example as a look-up table inside or outside the network unit 2.

One or more first message entities 6 are injected into the circulation by a Central Processing Unit, CPU 52 between the second combination unit 30 and the ingress processing pipeline 44. Of course, the one or more first message entities can be injected into the circulation by the CPU 52 at another point in the circle. An external memory 54 is connected to the ingress traffic manager 48. If the network unit 2 is implemented as Network Processor the CPU 52 and the external memory 54 are external components according to an external area 56. The external memory 54 is used to buffer traffic.

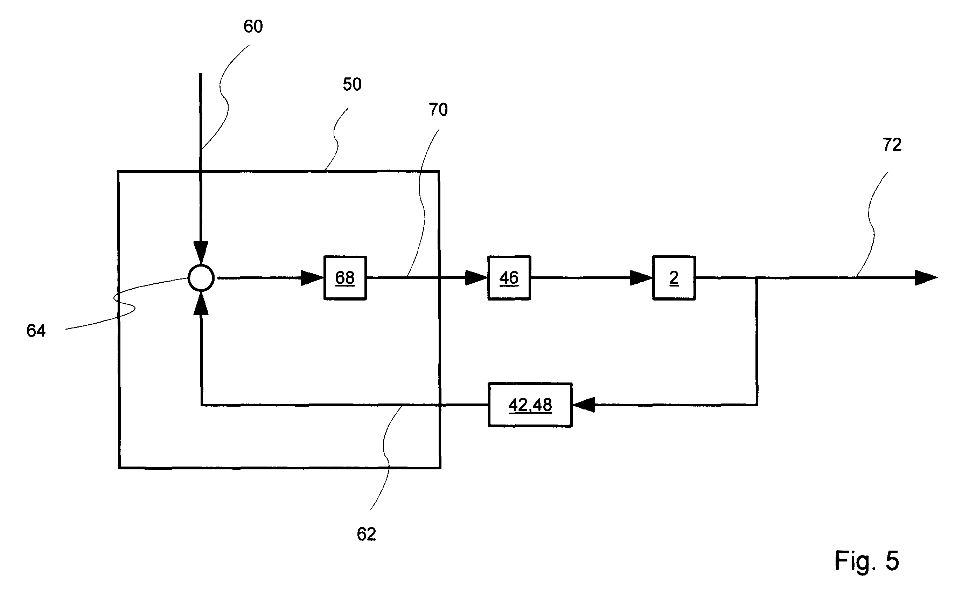

Figure 5 is a schematic depiction of the control scheme for the network unit 2. The set point flow value 60 for the second message entity 16 is applied to the control unit 50. The current flow value 62 of the first message entity 6 is measured by the ingress traffic manager 48 and/or the egress traffic manager 42 and is applied to the control unit 50. A unit 63 determines a difference 66 between the set point flow value 60 and the current flow value 62 by comparing the set point flow value 60 and the current flow value 62. Based on the difference 66 a controller 68 determines a corrective action signal 70 which is applied to the flow adjustment unit 46. The controller unit 50 operates the flow adjustment unit 46 depending on the comparison. The operation of the flow adjustment unit 46 has impact on the flow 72 of the first message entity 6 inside the network unit 2.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method to operate a network unit (2) of a message entity transfer network (4), comprising the steps of:
circulating a first message entity (6) by means of respective circulation means (20, 24, 28, 30),
emitting a second message entity (16) depending on the first circulating message entity (6) from the network unit (2) to the message entity transfer network (4), and
controlling a flow of the first circulating message entity (6) by means of a flow adjustment unit (46).

2. Method according to claim 1, further comprising:
passing the first message entity (6) through a first processing unit (8) of the network unit (2) in an ingress direction (10),
passing the first message entity (6) through a second processing unit (12) of the network unit (2) in an egress direction (14), and
emitting the second message entity (16) depending on the first message entity (6) from the network unit (2) to the message entity transfer network (4) in the egress direction (14) and/or the ingress direction (10).

3. Method according to claim 1 or 2, wherein the first message entity (6) and further ingress traffic message entities pass through the first processing unit (8) of the network unit (2) in the ingress direction (10), and wherein the first message entity (6) and further egress traffic message entities pass through the second processing unit (12) in the egress direction (14).

4. Method according to one of the preceding claims, wherein the first processing unit (8) comprises an ingress processing pipeline (44) and/or an ingress traffic manager (48), and wherein the second processing unit (12) comprises an egress processing pipeline (40) and/or an egress traffic manager (42).

5. Method according to one of the preceding claims, wherein the first processing unit (8) and/or the second processing unit (12) alters the content of a header of the first message entity (6) and/or the payload of the first message entity (6), wherein the first message entity (6) and the second message entity (16) are message entities according to level 2, 3 and/or 4 of the OSI model.

6. Method according to one of the preceding claims further comprising: establishing the second message entity (16) each time the first message (6) passes a generation unit.

7. Method according to claim 6, wherein the generation unit is arranged in the egress processing pipeline (40), the egress traffic manager (42), the ingress processing pipeline (44) or the ingress traffic manager (48), wherein the generation unit establishes the second message entity (16) based on an identification, especially a VLAN address in the header of the first message entity (6).

8. Method according to claim 1, further comprising:
buffering the first message entity (6) inside the network unit (2) for a first time period by means of a first buffer, especially a circular buffer, of the flow adjustment unit (46).

9. Method according to claim 8, further comprising:
buffering a further first message entity (6) inside the network unit (2) for a second time period by means of a second buffer, especially a circular buffer, of the flow adjustment unit (46).

10. Method according to one of the claims 1, 8 to 9, further comprising: changing a clock cycle for the transmission of the first message entity (6) and the transmission of further message entities inside the network unit (2) by means of the flow adjustment unit (46).

11. Method according to one of the claims 1, 9 to 10, further comprising: adjusting the flow of the first message entity (6) depending on a pre-set value by means of the flow adjustment unit (46).

12. Method according to one of the claims 1, 9 to 10, further comprising: applying a set point flow value (60) for the second message entity (16), measuring a current flow value (62) of the first message entity (6), comparing the set point flow value (60) and the current flow value (62), a controller unit (50) operating the flow adjustment unit (46) depending on the comparison.

13. Method according to one of the preceding claims, wherein the emitting of the second message entity (16) and/or of a plurality of second message entities (16) constitutes network traffic for an egress network or an ingress network, respectively.

14. Network unit (2) of a message entity transfer network (4), operable to circulate a first message entity (6) by means of respective circulation means (20, 24, 28, 30), operable to emit a second message entity (16) depending on the first message entity (6) from the network unit (2) to the message entity transfer network (4), and operable to control a flow of the circulating first message entity (6) by means of a flow adjustment unit (46).

15. Network unit (2) according to claim 14 operable to carry out the method according to one of the claims 1 to 13.

## Patentansprüche

1. Verfahren zum Betrieb einer Netzwerkeinheit (2) eines Nachrichtenentitäts-Übertragungsnetzwerks (4), umfassend folgende Schritte:
In-Umlauf-Bringen einer ersten Nachrichtenentität (6) mittels jeweiliger Umlaufmittel (20, 24, 28, 30),
Senden einer zweiten Nachrichtenentität (16) in Abhängigkeit von der ersten umlaufenden Nachrichtenentität (6) von der Netzwerkeinheit (2) an das Nachrichtenentitäts-Übertragungsnetzwerk (4), und
Kontrollieren eines Flusses der ersten umlaufenden Nachrichtenentität (6) mittels einer Flussregulierungseinheit (46).

2. Verfahren nach Anspruch 1, weiterhin umfassend:
Führen der ersten Nachrichtenentität (6) durch eine erste Verarbeitungseinheit (8) der Netzwerkeinheit (2) in Eingangsrichtung (10),
Führen der ersten Nachrichtenentität (6) durch eine zweite Verarbeitungseinheit (12) der Netzwerkeinheit (2) in Ausgangsrichtung (14), und
Senden der zweiten Nachrichtenentität (16) in Abhängigkeit von der ersten Nachrichtenentität (6) von der Netzwerkeinheit (2) an das Nachrichtenentitäts-Übertragungsnetzwerk (4) in Ausgangsrichtung (14) und/oder Eingangsrichtung (10).

3. Verfahren nach Anspruch 1 oder 2, wobei die erste Nachrichtenentität (6) und weitere Eingangsverkehr-Nachrichtenentitäten durch die erste Verarbeitungseinheit (8) der Netzwerkeinheit (2) in Eingangsrichtung (10) laufen, und wobei die erste Nachrichtenentität (6) und weitere Ausgangsverkehr-Nachrichtenentitäten durch die zweite Verarbeitungseinheit (12) in Ausgangsrichtung (14) laufen.

4. Verfahren nach einem beliebigen der vorstehenden Ansprüche, wobei die erste Verarbeitungseinheit (8) eine Eingangsverarbeitungspipeline (44) und/oder einen Eingangsverkehrsmanager (48) umfasst, und wobei die zweite Verarbeitungseinheit (12) eine Ausgangsverarbeitungspipeline (40) und/oder einen Ausgangsverkehrsmanager (42) umfasst.

5. Verfahren nach einem beliebigen der vorstehenden Ansprüche, wobei die erste Verarbeitungseinheit (8) und/oder die zweite Verarbeitungseinheit (12) den Inhalt eines Kopfteils der ersten Nachrichtenentität (6) und/oder das Nutzdatenvolumen der ersten Nachrichtenentität (6) verändern, wobei die erste Nachrichtenentität (6) und die zweite Nachrichtenentität (16) Nachrichtenentitäten gemäß Ebene 2, 3 und/oder 4 des OSI-Modells sind.

6. Verfahren nach einem beliebigen der vorstehenden Ansprüche, weiterhin umfassend: Aufbauen der zweiten Nachrichtenentität (16), jedes Mal, wenn die erste Nachricht (6) eine Erzeugungseinheit durchläuft.

7. Verfahren nach Anspruch 6, wobei die Erzeugungseinheit in der Ausgangsverarbeitungspipeline (40), dem Ausgangsverkehrsmanager (42), der Eingangsverarbeitungspipeline (44) oder dem Eingangsverkehrsmanager (48) angeordnet ist, wobei die Erzeugungseinheit die zweite Nachrichtenentität (16) basierend auf einer Identifikation, insbesondere einer VLAN-Adresse im Kopfteil der ersten Nachrichtenentität (6) aufbaut.

8. Verfahren nach Anspruch 1, weiterhin umfassend:
Puffern der ersten Nachrichtenentität (6) innerhalb der Netzwerkeinheit (2) für eine erste Zeitdauer mittels eines ersten Puffers, insbesondere eines Kreispuffers, der Flussregulierungseinheit (46).

9. Verfahren nach Anspruch 8, weiterhin umfassend:
Puffern einer weiteren ersten Nachrichtenentität (6) innerhalb der Netzwerkeinheit (2) für eine zweite Zeitdauer mittels eines zweiten Puffers, insbesondere eines Kreispuffers, der Flussregulierungseinheit (46).

10. Verfahren nach einem der Ansprüche 1, 8 bis 9, weiterhin umfassend: Ändern eines Taktzyklus für die Übertragung der ersten Nachrichtenentität (6) und die Übertragung von weiteren Nachrichtenentitäten innerhalb der Netzwerkeinheit (2) mittels der Flussregulierungseinheit (46).

11. Verfahren nach einem der Ansprüche 1, 9 bis 10, weiterhin umfassend: Regulieren des Flusses der ersten Nachrichtenentität (6) in Abhängigkeit von einem vorausbestimmten Wert mittels der Flussregulierungseinheit (46).

12. Verfahren nach einem der Ansprüche 1, 9 bis 10, weiterhin umfassend: Übernehmen eines Vorgabe-Flusswerts (60) für die zweite Nachrichtenentität (16), Messen eines aktuellen Flusswerts (62) der ersten Nachrichtenentität (6), Vergleichen des Vorgabe-Flusswerts (60) und des aktuellen Flusswerts (62), wobei eine Controller-Einheit (50) die Flussregulierungseinheit (46) in Abhängigkeit von dem Vergleich betreibt.

13. Verfahren nach einem beliebigen der vorstehenden Ansprüche, wobei das Senden der zweiten Nachrichtenentität (16) und/oder einer Vielzahl von zweiten Nachrichtenentitäten (16) den Netzwerkverkehr für jeweils ein Ausgangsnetzwerk oder ein Eingangsnetzwerk darstellt.

14. Netzwerkeinheit (2) eines Nachrichtenentitäts-Übertragungsnetzwerks (4), die betriebsfähig ist, um eine erste Nachrichtenentität (6) mittels jeweiliger Umlaufmittel (20, 24, 28, 30) in Umlauf zu bringen, betriebsfähig, um eine zweite Nachrichtenentität (16) in Abhängigkeit von der ersten umlaufenden Nachrichtenentität (6) von der Netzwerkeinheit (2) an das Nachrichtenentitäts-Übertragungsnetzwerk (4) zu senden, und betriebsfähig, um einen Fluss der umlaufenden ersten Nachrichtenentität (6) mittels einer Flussregulierungseinheit (46) zu kontrollieren.

15. Netzwerkeinheit (2) nach Anspruch 14, die betriebsfähig ist, um das Verfahren nach einem beliebigen der Ansprüche 1 bis 13 auszuführen.

## Revendications

1. Procédé d'activation d'une unité de réseau (2) d'un réseau de transfert d'entités de message (4), comprenant les étapes suivantes ;
faire circuler une première entité de message (6) au moyen de moyens de circulation respectifs (20, 24, 28, 30), émettre une seconde entité de message (16) en fonction de la première entité de message en circulation (6) depuis l'unité de réseau (2) vers le réseau de transfert d'entités de message (4), et contrôler un débit de la première entité de message en circulation (6) au moyen d'une unité d'ajustement de débit (46).

2. Procédé selon la revendication 1, comprenant en outre les étapes suivantes :
faire passer la première entité de message (6) par une première unité de traitement (8) de l'unité de réseau (2) dans une direction d'entrée (10),
faire passer la première entité de message (6) par une seconde unité de traitement (12) de l'unité de réseau (2) dans une direction de sortie (14), et
émettre la seconde entité de message (16) en fonction de la première entité de message (6) depuis l'unité de réseau (2) vers le réseau de transfert d'entités de message (4) dans la direction de sortie (14) et/ou la direction d'entrée (10).

3. Procédé selon la revendication 1 ou 2, dans lequel la première entité de message (6) et les entités de message de trafic entrant supplémentaires passent par la première unité de traitement (8) de l'unité de réseau (2) dans la direction d'entrée (10), et dans lequel la première entité de message (6) et les entités de message de trafic sortant supplémentaires passent par la seconde unité de traitement (12) dans la direction de sortie (14).

4. Procédé selon l'une quelconque des revendications précédentes, dans lequel la première unité de traitement (8) comprend un pipeline de traitement d'entrée (44) et/ou un gestionnaire de traitement d'entrée (48), et dans lequel la seconde unité de traitement (12) comprend un pipeline de traitement de sortie (40) et/ou un gestionnaire de trafic de sortie (42).

5. Procédé selon l'une quelconque des revendications précédentes, dans lequel la première unité de traitement (8) et/ou la seconde unité de traitement (12) modifie le contenu d'un en-tête de la première entité de message (6) et/ou la charge utile de la première entité de message (6), dans lequel la première entité de message (6) et la seconde entité de message (16) sont des entités de message conformes aux niveaux 2, 3 et/ou 4 du modèle OSI.

6. Procédé selon l'une quelconque des revendications précédentes, comprenant en outre l'étape suivante : établir la seconde entité de message (16) chaque fois que le premier message (6) passe par une unité de génération.

7. Procédé selon la revendication 6, dans lequel l'unité de génération est disposée dans le pipeline de traitement de sortie (40), le gestionnaire de trafic de sortie (42), le pipeline de traitement d'entrée (44) ou le gestionnaire de trafic d'entrée (48), dans lequel l'unité de génération établit la seconde entité de message (16) sur la base d'une identification, en particulier une adresse VLAN dans l'en-tête de la première entité de message (6).

8. Procédé selon l'une quelconque des revendications précédentes, comprenant en outre l'étape suivante :
mettre en tampon la première entité de message (6) à l'intérieur de l'unité de réseau (2) pendant une première période temporelle au moyen d'un premier tampon, en particulier un tampon circulaire, de l'unité d'ajustement de débit (46).

9. Procédé selon la revendication 8, comprenant en outre l'étape suivante :
mettre en tampon une première entité de message supplémentaire (6) à l'intérieur de l'unité de réseau (2) pendant une seconde période temporelle au moyen d'un second tampon, en particulier un tampon circulaire, de l'unité d'ajustement de débit (46).

10. Procédé selon l'une des revendications 1, 8 ou 9, comprenant en outre l'étape suivante : modifier un cycle d'horloge pour la transmission de la première entité de message (6) et la transmission d'entités de message supplémentaires à l'intérieur de l'unité de réseau (2) au moyen de l'unité d'ajustement de débit (46).

11. Procédé selon l'une des revendications 1, 9 à 10, comprenant en outre l'étape suivante : ajuster le débit de la première entité de message (6) en fonction d'une valeur prédéfinie au moyen de l'unité d'ajustement de débit (46).

12. Procédé selon l'une des revendications 1, 9 à 10, comprenant en outre les étapes suivantes : appliquer une valeur de débit de consigne (60) pour la seconde entité de message (16), mesurer une valeur de débit courante (62) de la première entité de message (6), comparer la valeur de débit de consigne (60) et la valeur de débit courante (62), une unité de commande (50) activant l'unité d'ajustement de débit (46) en fonction de la comparaison.

13. Procédé selon l'une quelconque des revendications précédentes, dans lequel l'émission de la seconde entité de message (16) et/ou d'une pluralité de secondes entités de message (16) constitue le trafic de réseau pour un réseau de sortie ou un réseau d'entrée, respectivement.

14. Unité de réseau (2) d'un réseau de transfert d'entités de message (4), pouvant fonctionner pour faire circuler une première entité de message (6) au moyen de moyens de circulation respectifs (20, 24, 28, 30), pouvant fonctionner pour émettre une seconde entité de message (16) en fonction de la première entité de message en circulation (6) depuis l'unité de réseau (2) vers le réseau de transfert d'entités de message (4), et pouvant fonctionner pour commander un débit de la première entité de message en circulation (6) au moyen d'une unité d'ajustement de débit (46).

15. Unité de réseau (2) selon la revendication 14, pouvant fonctionner pour exécuter le procédé selon l'une quelconque des revendications 1 à 13.
